# EUROPÄISCHE PATENTANMELDUNG

(11) **EP 4 113 347 A1**
(43) Veröffentlichungstag der Anmeldung: **04.01.2023**
(21) Anmeldenummer: 21182915.5
(22) Anmeldetag: 30.06.2021
(51) Int. Cl.: G06F 30/20, G06N 3/00, G06F 111/08

(54) **COMPUTERIMPLEMENTIERTES VERFAHREN UND SYSTEM ZUR ERZEUGUNG VON PERSONENBEZOGENEN DATEN FÜR PERSONEN-AUFENTHALTSORTE IN ÖFFENTLICHEN ODER GEWERBLICHEN RÄUMEN**

(71) Anmelder: Siemens Mobility GmbH, 81739 München (DE)
(72) Erfinder: Klein, Wolfram, 85579 Neubiberg (DE); Mayer, Hermann Georg, 83209 Prien am Chiemsee (DE); Pancini Fitzek, Theresa, 10963 Berlin (DE)

(57) **Zusammenfassung**

Um in öffentlichen oder gewerblichen Räumen Personenstromverteilungen in den Räumen bei minimalen Installationsaufwand von sensor-technischen Einrichtungen zur Erfassung von Personenströmen ermitteln zu können, wird es vorgeschlagen, 1. in mindestens einem Überwachungsbereich (ÜWB) mit mindestens einem überwachten Personen-Aufenthaltsort (PAO_{üb}) eines öffentlichen Raums (ÖFR) oder eines gewerblichen Raums (GWR) jeweils mindestens einen Überwachungsbereich-Personenstrom an dem Aufenthaltsort durch mindestens eine Überwachungssensorik sensorisch zu erfassen, **2.** erfasste Personen des Personenstroms als absolute Häufigkeiten (H_{abs}) quantifizierende Sensordaten (SD) zu erzeugen und **3.** auf der Basis eines in einem Raum-Bauplan-Modell (RBPM) abgebildeten statischen Raumszenarios und eines in einem Instanzengraph (IG) abgebildeten dynamischen Personenverhaltens (PV_{dyn}), das aus relativen Häufigkeiten (Hᵣₑₗ) eines Klassengraph (KG), in dem - wie beim Instanzengraph - der Aufenthaltsort und mindestens ein nichtüberwachter Personen-Aufenthaltsort (PAO_{nüb}) in dem ÖFR/GWR-Raum als Personennavigationsziele (PNZ) von Personenströmen als Knoten (KN), Aufenthaltsdauern der Personen an den Aufenthaltsorten als Eigenschaften der Knoten und Personenbewegungen zwischen den Aufenthaltsorten als Eigenschaften von Kanten (KA) zwischen den Knoten repräsentiert werden, derart abgeleitet wird, dass durch einen Häufigkeitsvergleich (HV) die relativen Häufigkeiten in weitere absolute Häufigkeiten (H'_{abs}) umgewandelt werden, zumindest für einen außerhalb des Überwachungsbereichs sensorisch unüberwachten Simulationsbereich (SMB) des ÖFR/GWR-Raums ein Personenaufkommen (PAK) zu simulieren und als Simulationsergebnis Personendaten (PD), die Personen des simulierten Personenaufkommens als die weiteren absolute Häufigkeiten quantifizieren, erzeugt werden.

## Beschreibung

Die Erfindung bezieht sich auf ein computerimplementiertes Verfahren zur Erzeugung von personenbezogenen Daten für Personen-Aufenthaltsorte in öffentlichen oder gewerblichen Räumen gemäß dem Oberbegriff des Patentanspruches 1 und ein System zur Erzeugung von personenbezogenen Daten für Personen-Aufenthaltsorte in öffentlichen oder gewerblichen Räumen gemäß dem Oberbegriff des Patentanspruches 7.

Eine Verteilung von Personenströmen in einem öffentlichen Raum, z.B. einem Bahnhof, einem Flughafen oder einem Marktplatz etc., oder einem gewerblichen Raum, z.B. einer Einkaufspassage, einem Kaufhaus, einem Möbelhaus oder einem Supermarkt etc., ist eine wichtige Größe zur Beurteilung von Sicherheitsfragen, z.B. Überfüllung oder Staus von Personen auf Bahn- oder Flugsteigen, Straßen, Plätzen, etc. im öffentlichen Raum, oder z.B. Überfüllung oder Staus von Personen an Rolltreppen, an Fahraufzügen, in Einkaufsetagen, an Verkaufskassen, etc. im gewerblichen Raum, aber auch relevant für wirtschaftliche Überlegungen.

Abhängig von einer Personenanzahl, einer Verweildauer der Personen an Personen-Aufenthaltsorten und/oder Zielen der Personen in dem jeweiligen Raum, können Planungen optimiert werden, um Anbieter und Geräte zu bestimmten Zeiten möglichst gut auszulasten und Ressourcen optimal einzusetzen.

Als Beispiele hierfür sind zu nennen:
- Personen, die z.B. einen Bahnhof betreten und sich erst dort ein Ticket kaufen, haben in der Regel mehr Zeit für einen nachfolgenden Einkauf, als Personen, die bereits online ihr Ticket gekauft haben und entsprechend knapp zum Bahnhof fahren, um Wartezeit zu sparen.
- Personen, die z.B. vom Bahnhof oder Flughafen in eine Stadt fahren, werden sich eher am Ziel mit Lebensmitteln eindecken, während Passagiere, die sich zu einer Anschlussverbindung begeben, vermutlich bereit sind relativ teure Preise vor Ort, z.B. am Bahnhof oder im Flughafen, zu akzeptieren. Diese Zusammenhänge können je nach Tages- oder Jahreszeit variieren und müssen daher regelmäßig aktualisiert werden, so z.B. im Weihnachtsgeschäft, bei Einfluss von temporären Baustellen, bei Saisonware, bei unterschiedlichem Verhalten von Pendlern und Touristen.

Personenströme im öffentlichen oder gewerblichen Raum werden gemäß dem Stand der Technik aktuell lokal durch Überwachungssensoriken, z.B. Kameras, Videoaufzeichnungsgeräte, sensorisch erfasst oder durch Punktzählung, z.B. über Registrierkassen oder Ticketautomaten. Dadurch ergibt sich ein gutes Bild des zeitlichen Verlaufs eines Personenverhaltens um das jeweilige Erfassungsgerät herum. Wenn das zu untersuchende Gebiet lückenlos überwacht wird, lässt sich damit ein zeitlich aufgelöstes Nutzungsprofil für den gesamten Raum erstellen. Interessante Navigationsziele der Personen, z.B. Geschäfte, Ticketautomaten, Ein- Ausgänge, etc., lassen sich dabei als Knoten in einem Graphen darstellen. Man spricht in diesem Fall von einer personenstromflussbasierten Analyse des Personenverhaltens, die auf sensorischer Erfassung, z.B. einer Kamera- oder Videoanalyse etc. basiert. Um eine derartige Analyse durchführen zu können, ist ein erheblicher und großer Installationsaufwand an Überwachungssensorik in dem öffentlichen oder gewerblichen Raum erforderlich und womit ein System zur Erzeugung von personenbezogenen Daten für Personen-Aufenthaltsorte in öffentlichen oder gewerblichen Räumen, mit dem für diesen Zweck eine lückenlose Überwachung von Personen an den Personen-Aufenthaltsorten erreicht werden soll, ein schon ins Gewicht fallendes Investment darstellt.

Eine durchschnittliche Aufenthaltsdauer der Personen zu einer bestimmten Zeit wird als Eigenschaft des Knotens gespeichert. Entsprechend können die relativen Häufigkeiten der Bewegung zwischen den Knoten als Eigenschaft von Kanten festgehalten werden. Einzelne Knoten können dabei in hierarchisch verknüpften Subgraphen aufgelöst werden. So kann beispielweise eine Detaillierung des Bahnhofs innerhalb einer Stadt und für diesen Bahnhof wieder eine damit verknüpfte Detaildarstellung eines Gleisbereichs entsprechend aufgelöst werden. Für die Erstellung entsprechender Graphen aus Sensordaten, z.B. Kameradaten, existieren bereits zahlreiche zum Stand der Technik zählende Verfahren, die damit als bekannt vorausgesetzt werden können. Ob die Graphen bereits hierarchisch aufgelöst verknüpft und gespeichert werden ist nicht bekannt. Weiterhin kann vorausgesetzt werden, dass der Graph nicht für einen bestimmten Raum angelegt wird, z.B. Bahnhof einer bestimmten Stadt, sondern für entsprechende Klassen, z.B. Bahnhöfe. Dementsprechend kann der Graph, der zunächst aus einer Instanz, für die bestimmte Stadt gewonnen wurde, aus einer anderen Instanz, z.B. einer anderen Stadt, ergänzt werden. Ist z.B. im Bahnhof einer Stadt A nur der Gleisbereich sensorüberwacht, z.B. videoüberwacht, während im Bahnhof einer Stadt B dies für ein Einkaufsbereich der Fall ist, so lassen sich die Beobachtungen in einen Gesamtgraph "Bahnhof" integrieren. Insgesamt lässt sich damit ein Graph für Nutzungsklassen erstellen, die eine weitgehend deckungsgleiche Zusammensetzung aus Knoten aufweisen. So gibt es z.B. in allen größeren Bahnhöfen eine Bäckerei, eine Bahnhofsgaststätte, einen Ticketschalter, einen Kiosk, einen Lebensmittelladen, einen Buch- und Zeitschriftenladen, Toilettenräume, etc. Während eine absolute Zahl der Personen sich unterschieden kann, diese wird im Graph gemäß dem Stand der Technik nicht gespeichert, ist zumindest davon auszugehen, dass relativen Häufigkeiten für Verweilzeiten und Personenbewegungen nur von der Nutzungsklasse abhängen.

Insgesamt lassen sich solche allgemeinen Nutzungsklassen dann auf neue Instanzen abbilden, für die bisher noch keine Erfahrungswerte vorliegen oder die sogar erst neu gebaut werden. Ein Beispiel dafür ist im gewerblichen Raum die Errichtung neuer Möbelhäuser oder Supermärkte, deren Inneneinrichtung immer einem festen Schema folgt, das gemäß dem vorstehend beschriebenen Verfahren erzeugt wurde. So z.B. Kleinteile als Sachen zum Hinstellen am Ausgang von Möbelhäusern, Zigaretten und Süßigkeiten im Kassenbereich sowie Obst am Eingang von Supermärkten. Entsprechende Verfahren lassen sich im öffentlichen Bereich auch auf einen Campus (Gelände mit mehreren zusammengehörenden Gebäuden und/oder Einrichtungen) oder Stadtbereich hochskalieren.

Während sich aber Möbelhäuser und Supermärkte in der Regel auch topologisch und/oder geometrisch ähnlich gestalten lassen, ist das im Campus und Stadtbereich üblicherweise nicht der Fall. Daher stimmt eine Nutzungsvorhersage zwar bei grober Betrachtung zwischen verschiedenen Instanzen, z.B. Flughäfen verschiedener Städte, überein, für Detailbereiche können aber keine Vorhersagen gemacht werden, insbesondere wenn diese nicht durch Überwachungssensoriken, z.B. Kameras, erfasst werden.

Die der Erfindung zugrundeliegende Aufgabe besteht darin, ein computerimplementiertes Verfahren und System zur Erzeugung von personenbezogenen Daten für Personen-Aufenthaltsorte in öffentlichen oder gewerblichen Räumen anzugeben, mit dem Personenstromverteilungen in den Räumen bei minimalen Installationsaufwand von sensor-technischen Einrichtungen zur Erfassung von Personenströmen ermittelt werden können.

Diese Aufgabe wird ausgehend von dem im Oberbegriff des Patentanspruchs 1 definierten dem Verfahren durch die im Kennzeichen des Patentanspruches 1 angegebenen Merkmale gelöst.

Darüber hinaus wird die Aufgabe ausgehend von dem im Oberbegriff des Patentanspruchs 7 definierten System durch die im Kennzeichen des Patentanspruches 7 angegebenen Merkmale gelöst.

Die der Erfindung gemäß den unabhängigen Ansprüchen 1 und 7 zugrundeliegenden Idee besteht darin,
- in mindestens einem Überwachungsbereich mit mindestens einem überwachten Personen-Aufenthaltsort eines öffentlichen Raums oder eines gewerblichen Raums jeweils mindestens einen Überwachungsbereich-Personenstrom an dem Personen-Aufenthaltsort durch mindestens eine Überwachungssensorik sensorisch zu erfassen,
- erfasste Personen des Personenstroms als absolute Häufigkeiten quantifizierende Sensordaten zu erzeugen und
- auf der Basis eines in einem Raum-Bauplan-Modell abgebildeten statischen Raumszenarios und eines in einem Instanzengraph abgebildeten dynamischen Personenverhaltens, das aus relativen Häufigkeiten eines Klassengraph, in dem wie beim Instanzengraph der überwachte Personen-Aufenthaltsort und mindestens ein nicht-überwachter Personen-Aufenthaltsort in dem öffentlichen oder gewerblichen Raum als Personennavigationsziele von, insbesondere sich zahlenmäßig unterscheidenden und/oder dynamisch verändernden, Personenströmen als Knoten, Aufenthaltsdauern der Personen an den Personen-Aufenthaltsorten als Eigenschaften der Knoten und Personenbewegungen zwischen den Personen-Aufenthaltsorten als Eigenschaften von Kanten zwischen den Knoten repräsentiert werden, derart abgeleitet wird, dass durch einen Häufigkeitsvergleich die relativen Häufigkeiten in weitere absolute Häufigkeiten umgewandelt werden, zumindest für einen außerhalb des Überwachungsbereichs sensorisch unüberwachten Simulationsbereich des öffentlichen oder gewerblichen Raums ein Personenaufkommen zu simulieren und als Simulationsergebnis Personendaten, die Personen des simulierten Personenaufkommens als weitere absolute Häufigkeiten quantifizieren, zu erzeugen.

Der wesentliche Unterschied zu der bestehenden, bekannten personenstromflussbasierten Analyse des Personenverhaltens ist, dass mit der vorgestellten Erfindung eine detaillierte Analyse für einen sensorisch unüberwachten Personenaufenthaltsbereich des öffentlichen oder gewerblichen Raums erfolgen kann, der vorzugsweise außerhalb des Überwachungsbereichs liegt. Da die erfindungsgemäße Detailanalyse - wie angegeben - simulationsbasiert durchgeführt wird - ist der sensorisch unüberwachte Personenaufenthaltsbereich ein sensorisch unüberwachter Simulationsbereich.

Durch die erfindungsgemäße simulationsbasierte Analyse des Personenverhaltens lässt sich im Vergleich zu der bekannten personenstromflussbasierten Analyse des Personenverhaltens, die auf sensorischer Erfassung, z.B. einer Kamera- oder Videoanalyse etc. basiert, der für Letztere erheblichere und größere Installationsaufwand an Überwachungssensorik in dem öffentlichen oder gewerblichen Raum deutlich reduzieren. Dadurch verringert sich auch das Investment für das Installieren von sensor-technischen Einrichtungen in öffentlichen oder gewerblichen Räumen.

Wird hingegen bei der vorteilhaften Weiterbildung der Erfindung gemäß den Ansprüchen 2 und 8 auch in dem Überwachungsbereich des öffentlichen oder gewerblichen Raums die Personenstromsimulation mit dem Personenstromsimulator durchgeführt, so hat dies eine deutlich höhere Aussagekraft als nur die bekannte personenstromflussbasierte Analyse.

Computerimplementiert in Bezug auf das erfindungsgemäße Verfahren ist gleichbedeutend für das erfindungsgemäße System gemäß Anspruch 13 mit einem computerimplementiertes Werkzeug das vorzugsweise ein als APP ausgebildetes Computer-Programm-Produkt ist.

Eine weitere vorteilhafte Weiterbildung der Erfindung ist es, dass einerseits gemäß den Ansprüchen 3 und 9 der öffentliche Raum z.B. ein Bahnhof, ein Flughafen oder ein Marktplatz und andererseits gemäß den Ansprüchen 4 und 10 der gewerbliche Raum eine Einkaufspassage, ein Kaufhaus, ein Möbelhaus oder ein Supermarkt ist.

Zudem kann die Erfindung gemäß den Ansprüchen 5 und 11 vorteilhaft derart weitergebildet werden, dass das Raum-Bauplan-Modell auf einem "Building Information Modeling <BIM>"-Modell basiert.

Darüber hinaus kann die Erfindung gemäß den Ansprüchen 5 und 11 in der Weise vorteilhaft weitergebildet werden, dass die Personenstromsimulation auf eine mikroskopische Simulation von Personenströmen basiert. Die mikroskopische Simulation der Personenströmen kann dabei z.B. mit einer Simulationssoftware vom Typ "Crowd Control" oder "Legion" durchgeführt werden.

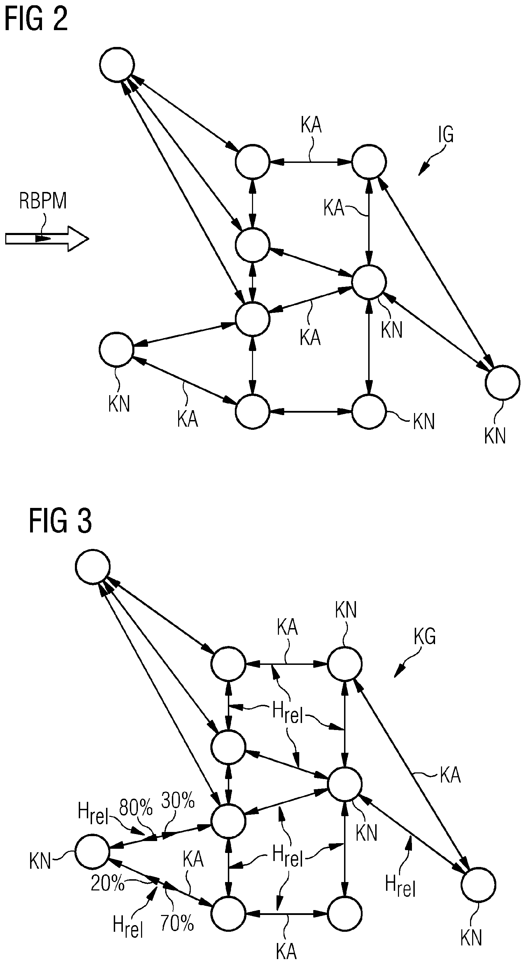

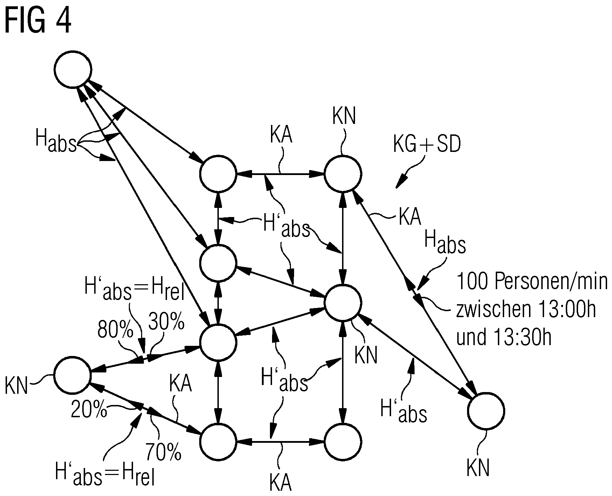

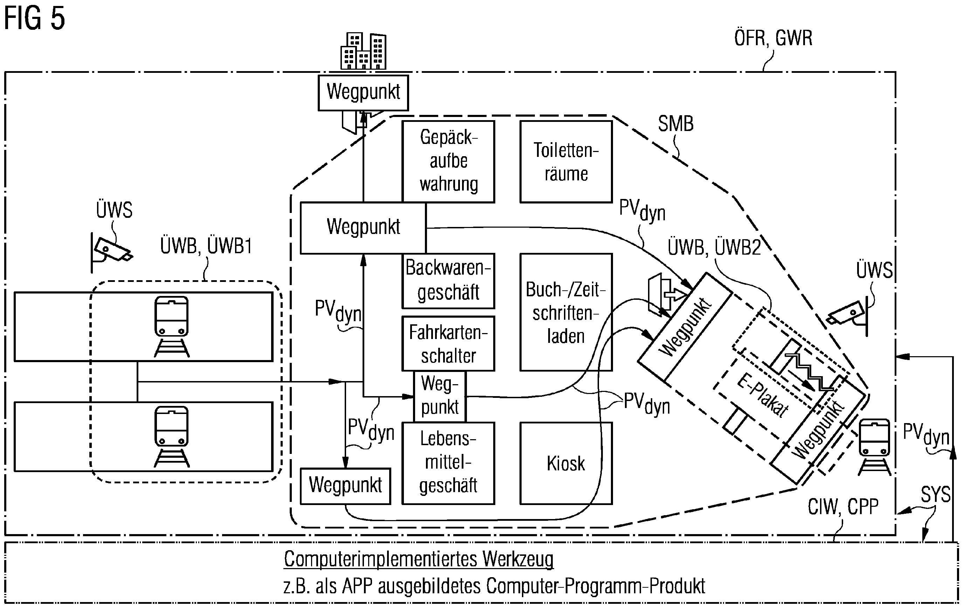

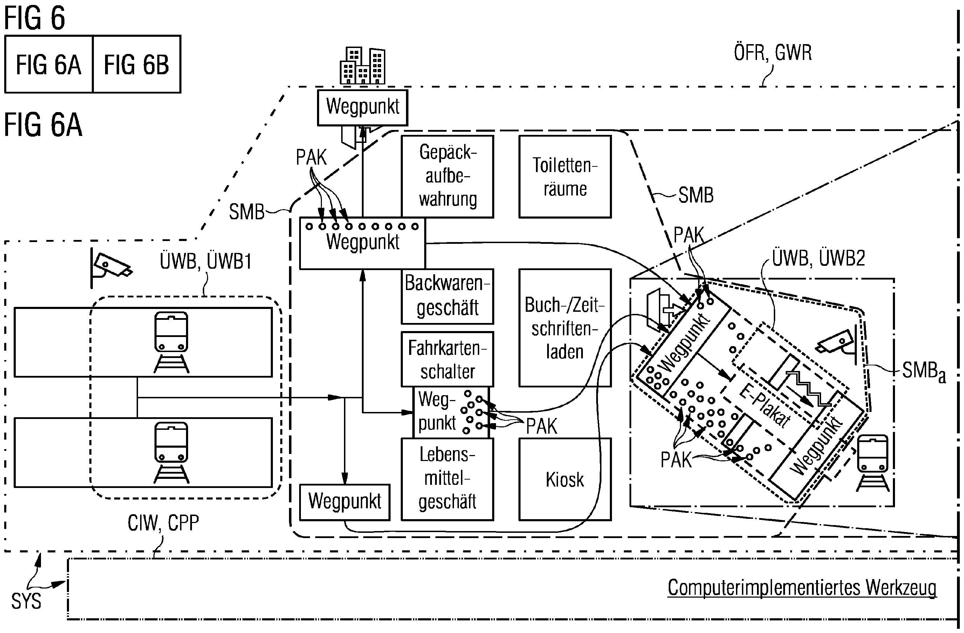

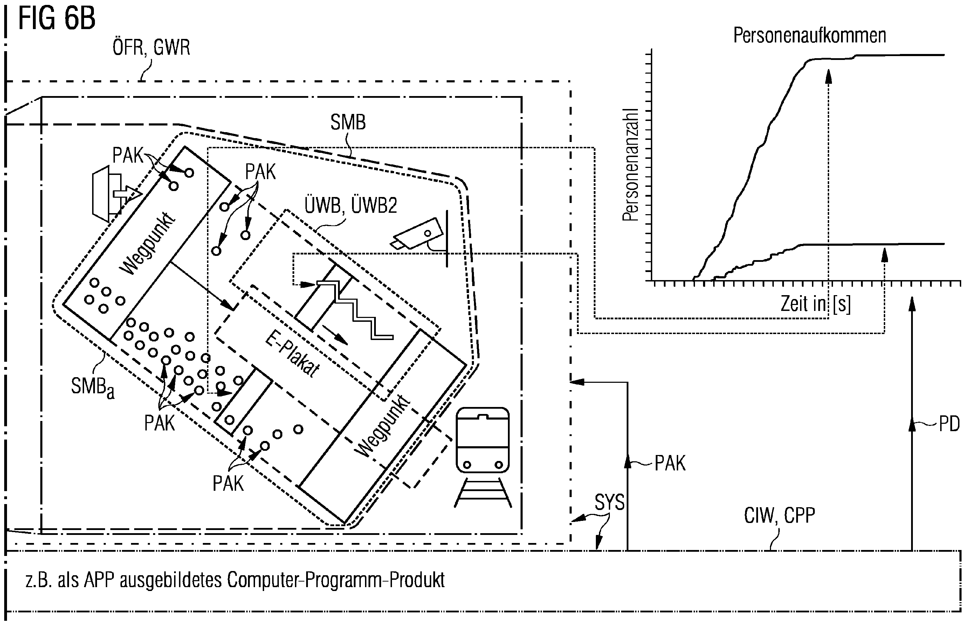

Mit dem erfindungsgemäßen ist es möglich, auch Aussagen zu unüberwachten Personen-Aufenthaltsorten als einem Detailbereichen in öffentlichen oder gewerblichen Räumen zu erhalten, sofern für den Raum mit überwachten und nicht-überwachten Personen-Aufenthaltsorten zumindest ein Instanzen-/Klassengraph und für zumindest ein überwachten Personen-Aufenthaltsort Sensordaten oder -werte vorliegen, sodass zumindest für diesen überwachten Personen-Aufenthaltsort Aussagen zur absoluten Personenzahl gemacht werden können, mit denen dann relativen Angaben aus dem Klassengraph skaliert werden können. Die absoluten Häufigkeiten für das genaueste Detaillevel können dabei mit einem Kachelbasierten Ansatz erfasst werden (vgl. FIGUREN 2 bis 4). Danach wird für einen neu zu planenden öffentlichen oder gewerblichen Raum ein zunächst leerer Instanzengraph angelegt (d.h. nur verbundene Knoten ohne Häufigkeiten - vgl. FIGUR 2). Dieser kann aus einem semantischen Modell abgeleitet werden, z.B. BIM Modell, indem die Nutzungsart des zu planenden öffentlichen oder gewerblichen Raums hinterlegt ist (z.B. Ladenbereich einer Bäckerei) oder bestimmte Geräte als Nutzungspunkte. In diesem Instanzengraph werden nun die relativen und absoluten Häufigkeiten eingetragen, soweit sie mit der Sensorik erfasst werden können (vgl. FIGUR 3). Die fehlenden Angaben zu relativen Häufigkeiten in dem Graph können nun durch einen Vergleich mit dem Klassengraph gewonnen werden (z.B. im Fall eines Bahnhofs als ein öffentlichen Raum ein relativer Anteil Personen, die von einer Bäckerei zur U-Bahn laufen oder erst einmal zum Ticketschalter). Diese werden nun durch einen Vergleich mit überwachten Bereichen in absolute Häufigkeiten umgewandelt (vgl. FIGUR 4. Als Ergebnis erhält man einen Instanzengraphen der vollständig mit absoluten Häufigkeiten (zeitabhängig) gefüllt ist und mit dem sich bereits makroskopische Nutzungsdaten für die nicht-überwachten Personen-Aufenthaltsorten ermitteln lassen. Um aus diesen nun mikroskopische Details zu gewinnen, wird z.B. für den neu zu planenden öffentlichen oder gewerblichen Raum eine mikroskopische Personenstromsimulation erstellt (z.B. basierend auf einer Simulationssoftware vom Typ "Crowd Control" oder "Legion"). Ein statisches Szenario dazu, hierzu gehören im Wesentlichen begehbare Bereiche oder Hindernisse, wie z.B. Wände, feste Einrichtungen oder feste Gegenstände) wird aus einem Bauplan des zu planenden öffentlichen oder gewerblichen Raums gewonnen (z.B. vorzugsweise das bereits erwähnte BIM-Modell). Ein dynamisches Personenverhalten (Personenquellen nach Zeit, Wegpunktewahl usw.) stammt aus dem erstellten Instanzengraph mit absoluten Häufigkeiten. Damit lässt sich ein funktionsfähiges Szenario für einen Simulator erstellen (vgl. FIGUR 5). Als Ergebnis der Simulation erhält man nun eine detaillierte Vorhersage für Teilbereiche, wie sie allein aufgrund der bekannten Personenstromflussanalyse nicht möglich wäre. Ein Beispiel dafür ist in FIGUR 6 zu sehen: Der untere Teilbereich des Transferbereichs in dem Bahnhofs zum Ausgangsbereich zur U-Bahn ist in der Personenstromflussanalyse lediglich durch eine einzelne Kante mit entsprechend homogener absoluter Häufigkeit dargestellt. In der mikroskopischen Analyse des Simulators ist aber ersichtlich, dass wesentlich mehr Personen (ca. Faktor 5) unterhalb von E-Plakaten (z.B. Werbetafeln) vorbeilaufen als oberhalb der Plakate (den oberen Teil des Transferbereichs). Dies ergibt sich aufgrund des vorherigen Verhaltens der Personen im Bahnhofsgebäude bzw. der Bahnhofshalle). Dementsprechend kann die zum unteren Teilbereich des Transferbereichs gerichtete Seite der E-Plakate deutlich teurer vermietet werden als die Rückseite, die zum unteren Teilbereich des Transferbereichs gerichtete Seite. Bei einer weiteren Analyse könnte sich z.B. ergeben, dass dieses Verhalten nur für Personen, z.B. Pendler, am Morgen gilt, während andere Personen, z.B. Touristen, tagsüber eher oben an den Werbetafeln vorbeilaufen. Entsprechend könnten dann zielgerichtet Werbeangebote für die jeweilige Personengruppen geschalten werden (ggf. bei dynamischen Werbetafeln auch zeitlich optimiert).

Weitere Vorteile der Erfindung ergeben sich aus der nachfolgenden Beschreibung von zwei Ausführungsbeispielen der Erfindung anhand von FIGUREN 1 bis 6 erläutert. Diese zeigen:
FIGUR 1 ein Ausgangsszenario zur Erzeugung von personenbezogenen Daten für Personen-Aufenthaltsorte in einem öffentlichen oder gewerblichen Raum mit einem zu diesem Zweck ausgebildetes System,
FIGUR 2 einen auf der Basis eines Raum-Bauplan-Modells zum Abbilden eines statischen Raumszenarios generierten, den öffentlichen oder gewerblichen Raum als Instanz oder Gattung angebenden Instanzengraph
FIGUR 3 einen auf der Basis des Instanzengraph in der FIGUR 2 gebildeten Klassengraph,
FIGUR 4 auf der Basis des Instanzengraph in der FIGUR 2, des Klassengraph in der FIGUR 3 und von Sensordaten eine graphische Darstellung eines Personenverhaltens anhand von Häufigkeiten,
FIGUR 5 die graphische Darstellung eines dynamischen Personenverhalten in dem öffentlichen oder gewerblichen Raum gemäß der FIGUR 1,
FIGUR 6 die graphische Darstellung eines simulierte Personenaufkommens und daraus erzeugte Personendaten in dem öffentlichen oder gewerblichen Raum gemäß der FIGUR 1.

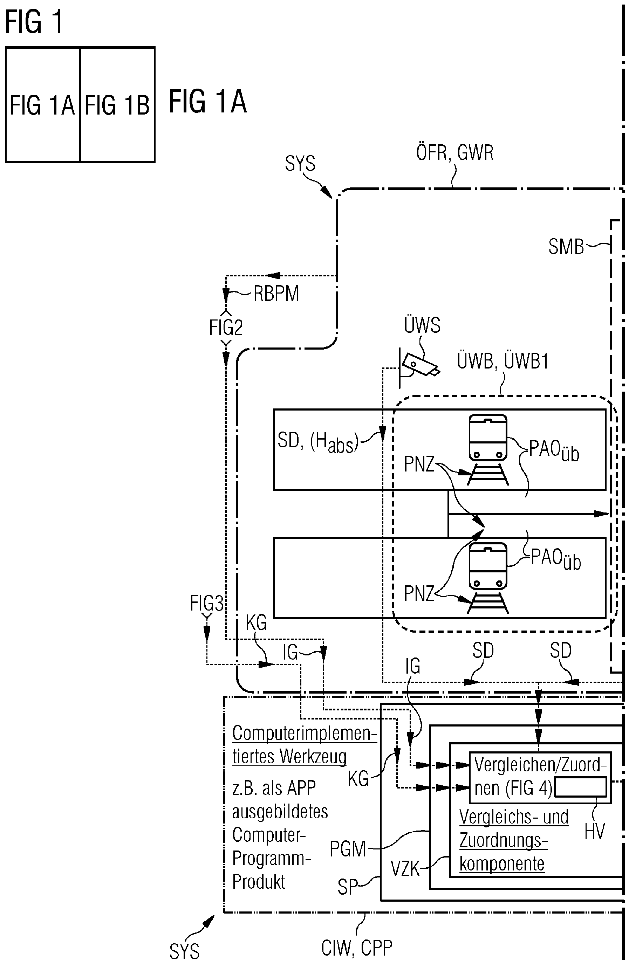

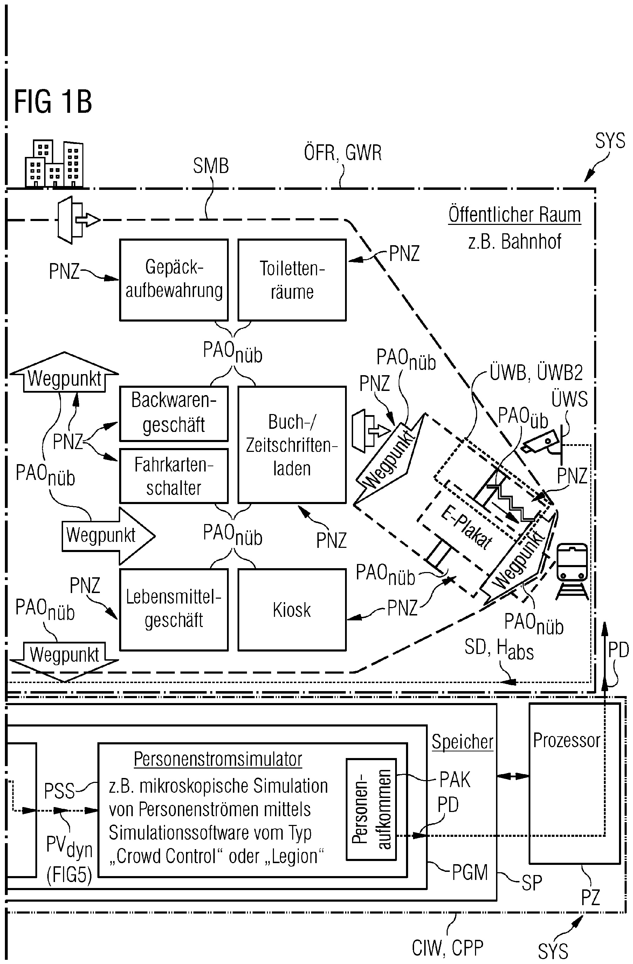

FIGUR 1 zeigt ein Ausgangsszenario zur Erzeugung von personenbezogenen Daten für Personen-Aufenthaltsorte in einem Bahnhof als öffentlichen Raum ÖFR mit einem zu diesem Zweck ausgebildetes System SYS, in dem die Erzeugung computerimplementiert ausgeführt wird. Wie bereits eingangs erwähnt, lassen sich die nachfolgenden Ausführungen zur Erzeugung von personenbezogenen Daten für Personen-Aufenthaltsorte einerseits auch auf andere öffentliche Räume als den Bahnhof, wie z.B. einem Flughafen oder einem Marktplatz, sowie andererseits auch auf einen gewerblichen Raum GWR, wie z.B. eine Einkaufspassage, ein Kaufhaus, ein Möbelhaus oder ein Supermarkt etc., anwenden.

In dem als Bahnhof dargestellten öffentlichen Raum ÖFR gibt es in dem dargestellten Szenario zwei Überwachungsbereiche ÜWB mit jeweils mindestens einem überwachten Personen-Aufenthaltsort PAO_{üb} und einem Simulationsbereich SMB mit mindestens einem nicht-überwachter Personen-Aufenthaltsort PAO_{nüb}. Der Simulationsbereich SMB kann dabei entweder - wie in der FIGUR 1 dargestellt - mit dem Überwachungsbereich ÜWB teilweise überlappen oder - wie ebenfalls in der FIGUR 1 dargestellt - den Überwachungsbereich ÜWB vollständig erfassen oder aber auch außerhalb des Überwachungsbereich ÜWB liegen. In dem jeweiligen Überwachungsbereich ÜWB befindet sich zur Überwachung des jeweiligen überwachten Personen-Aufenthaltsorts PAO_{üb} mindestens eine Überwachungssensorik ÜWS, die z.B. als Kamera oder als Videoaufzeichnungsgerät ausgebildet sein kann. Für den als Bahnhof dargestellten öffentlichen Raum ÖFR umfasst ein erster Überwachungsbereich ÜWB1 der beiden Überwachungsbereiche ÜWB einen Gleis- und Bahnsteigbereich von Fernzügen inklusive Übergangsbereich zur Bahnhofshalle und ein zweiter Überwachungsbereich ÜWB1 einen oberen Teil eines Transferbereich aus der Bahnhofshalle mit Auf- und Abgängen zu innerstädtischen Personentransportmitteln, wie z.B. U-Bahn, S-Bahn, Straßenbahn, etc. Ein unterer Teil des Transferbereich aus der Bahnhofshalle mit Auf- und Abgängen zu innerstädtischen Personentransportmitteln wird nicht überwacht. In diesem Transferbereich zwischen dem unteren und oberen Teil befindet sich unter anderem zumindest ein E-Plakat für Werbeanzeigen.

Alternativ zu den dargestellten Überwachungsbereichen ÜWB, ÜWB1, ÜWB2 ist es aber auch möglich andere oder zusätzliche - je nach Bedarf und Sinnhaftigkeit für die Erzeugung der personenbezogenen Daten - Bereiche des als Bahnhof dargestellten öffentlichen Raums ÖFR mit Überwachungssensoriken ÜWS zu versehen.

Die Überwachungssensorik ÜWS erfasst dabei jeweils mindestens einen Überwachungsbereich-Personenstrom sensorisch und erzeugt aus erfassten Personen des Personenstroms als absolute Häufigkeiten H_{abs} quantifizierende Sensordaten SD.

Der Simulationsbereich SMB in dem als Bahnhof dargestellten öffentlichen Raum ÖFR enthält mehrere nicht-überwachte Personen-Aufenthaltsorte PAO_{nüb}. Die Personen-Aufenthaltsorte PAO_{nüb} in dem Bahnhofsgebäude sind z.B. drei Wegpunkte als Verkehrspunkte von sich treffenden und kreuzenden Personenströmen, ein Bereich für Gepäckaufbewahrung, Toilettenräume, ein Backwarengeschäft, ein Fahrkartenschalter, ein Buch- und Zeitschriftenladen, ein Lebensmittelgeschäft und ein Kiosk.

All die genannten Personen-Aufenthaltsorte PAO_{üb}, PAO_{nüb} stellen Personennavigationsziele PNZ von Personenströmen dar, die sich vorzugsweise zahlenmäßig unterscheiden und/oder dynamisch verändern.

Um nun neben den Sensordaten SD weitere personenbezogene Daten für die genannten Personen-Aufenthaltsorte PAO_{üb}, PAO_{nüb} in dem als Bahnhof dargestellten öffentlichen Raum ÖFR computerimplementiert zu erzeugen, enthält das System SYS zusätzlich zu den Überwachungssensoriken ÜWS eine Vergleichs- und Zuordnungskomponente VZK und einen Personenstromsimulator PSS. Zu diesem Zweck werden die Sensordaten SD der Vergleichs- und Zuordnungskomponente VZK zugeführt.

Der Personenstromsimulator PSS ist dabei vorzugsweise derart ausgebildet, dass eine mikroskopische Simulation der Personenströme durchgeführt wird. Diese Simulation basiert z.B. auf einer Simulationssoftware vom Typ "Crowd Control" oder "Legion".

Die Vergleichs- und Zuordnungskomponente VZK und der Personenstromsimulator PSS sind vorzugsweise für die computerimplementierte Erzeugung der weiteren personenbezogenen Daten Bestandteil eines computerimplementierten Werkzeugs CIW, das vorzugsweise als ein z.B. als APP ausgebildetes Computer-Programm-Produkt CPP ausgebildet ist. Das computerimplementierte Werkzeug CIW bzw. das Computer-Programm-Produkt CPP weist dazu einen nicht-flüchtigen, lesbaren Speicher SP, in dem prozessorlesbare Steuerprogrammbefehle eines Programm-Moduls PGM gespeichert sind, und einen mit dem Speicher SP verbundenen Prozessor PZ, der die Steuerprogrammbefehle des Programm-Moduls PGM ausführt, auf. Das Programm-Modul PGM enthält im Zuge der personenbezogenen Datenerzeugung die Vergleichs- und Zuordnungskomponente VZK und den Personenstromsimulator PSS.

Für die computerimplementierte Erzeugung der weiteren personenbezogenen Daten wird weiterhin ein auf der Basis eines Raum-Bauplan-Modells RBPM zum Abbilden eines statischen Raumszenarios generierter, den öffentlichen oder gewerblichen Raum ÖFR, GWR als Instanz oder Gattung angebender Instanzengraph IG der Vergleichs- und Zuordnungskomponente VZK zugeführt.

Das Raum-Bauplan-Modell RBPM basiert beispielsweise auf einem "Building Information Modeling <BIM>"-Modell.

FIGUR 2 zeigt den auf der Basis des Raum-Bauplan-Modells RBPM zum Abbilden des statischen Raumszenarios generierten den öffentlichen oder gewerblichen Raum ÖFR, GWR als Instanz oder Gattung angebenden Instanzengraph IG. In diesem Instanzengraph IG werden die Personen-Aufenthaltsorte PAO_{nüb}, PAO_{üb} des öffentlichen oder gewerblichen Raums ÖFR, GWR als Knoten KN, Aufenthaltsdauern der Personen an den Personen-Aufenthaltsorten PAO_{nüb}, PAO_{üb} als Eigenschaften der Knoten KN und Personenbewegungen zwischen den Personen-Aufenthaltsorten AO_{nüb}, AO_{üb} als Eigenschaften von Kanten KA zwischen den Knoten KN repräsentiert.

Für die computerimplementierte Erzeugung der weiteren personenbezogenen Daten wird außerdem ein auf dem Instanzengraph IG basierender, den öffentlichen oder gewerblichen Raum ÖFR, GWR als Klasse angebenden Klassengraph KG der Vergleichs- und Zuordnungskomponente VZK zugeführt.

FIGUR 3 zeigt den auf der Basis des Instanzengraph IG in der FIGUR 2 gebildeten Klassengraph KG. Auch in diesem Klassengraph KG werden die Personen-Aufenthaltsorte PAO_{nüb}, PAO_{üb} des öffentlichen oder gewerblichen Raums ÖFR, GWR wieder als Knoten KN, Aufenthaltsdauern der Personen an den Personen-Aufenthaltsorten PAO_{nüb}, PAO_{üb} als Eigenschaften der Knoten KN und Personenbewegungen zwischen den Personen-Aufenthaltsorten AO_{nüb}, AO_{üb} als Eigenschaften von Kanten KA zwischen den Knoten KN repräsentiert.

Gemäß dem in der FIGUR 3 dargestellten Klassengraph KG bewegen sich beispielsweise Personen mit einer relativen Häufigkeit von 30% von dem unteren Gleis- und Bahnsteigbereich der Fernzüge in dem ersten Überwachungsbereich ÜWB1 über den Übergangsbereich zum Ticketschalter in der Bahnhofshalle und Personen mit einer relativen Häufigkeit von 80% in Gegenrichtung und es bewegen sich folgerichtig Personen mit einer relativen Häufigkeit von 70% von dem unteren Gleis- und Bahnsteigbereich der Fernzüge in dem ersten Überwachungsbereich ÜWB1 über den Übergangsbereich zum Lebensmittelgeschäft in der Bahnhofshalle und wieder folgerichtig Personen mit einer relativen Häufigkeit von 80% in Gegenrichtung.

In der Vergleichs- und Zuordnungskomponente VZK mit den zugeführten Sensordaten SD, dem zugeführten Instanzengraph IG und dem zugeführten Klassengraph KG, werden die Personenbewegungen in dem Instanzengraph IG für ein dynamischen Personenverhaltens PV_{dyn} in dem öffentlichen oder gewerblichen Raum ÖFR, GWR abgebildet.

FIGUR 4 zeigt auf der Basis des Instanzengraph IG in der FIGUR 2, des Klassengraph KG in der FIGUR 3 und der Sensordaten SD eine graphische Repräsentation eines Personenverhaltens anhand von Häufigkeiten. Gemäß dem in der FIGUR 4 gezeigten graphischen Darstellung bewegen sich durch die Überwachung in dem zweiten Überwachungsbereich ÜWB2 beispielsweise 100 Personen zwischen 13:00h und 13:30h in beiden Richtungen zwischen den Toilettenräumen und dem oberen Teil des Transferbereichs aus der Bahnhofshalle mit den Auf- und Abgängen zu den innerstädtischen Personentransportmitteln.

Gemäß der der Darstellung in der FIGUR 4 und durch die Vergleichs- und Zuordnungskomponente VZK werden für das Erstellen des dynamischen Personenverhaltens PV_{dyn} an den Kanten KA zwischen den Knoten KN als die Repräsentation der überwachten Personen-Aufenthaltsorte PAO_{üb} durch die Zuordnung der Sensordaten SD mit den absoluten Häufigkeiten H_{abs} angegeben.

Darüber hinaus werden für das Erstellen des dynamischen Personenverhaltens PV_{dyn} an den Kanten KA zwischen den Knoten KN als die Repräsentation der nicht-überwachten Personen-Aufenthaltsorte PAO_{nüb} durch Vergleich mit dem Klassengraph KG mit den dortigen, relativen Häufigkeiten angegeben und alle relativen Häufigkeiten Hᵣₑₗ durch einen Häufigkeitsvergleich HV mit den überwachten Personen-Aufenthaltsorten PAO_{üb} in weitere absolute Häufigkeiten H'_{abs} umgewandelt.

Der Personenstromsimulator PSS simuliert nun, nach dem Erstellen des dynamischen Personenverhaltens PV_{dyn} durch die Vergleichs- und Zuordnungskomponente VZK, auf der Basis des in dem Raum-Bauplan-Modell RBPM abgebildeten statischen Raumszenarios und des in dem Instanzengraph IG abgebildeten dynamischen Personenverhaltens PV_{dyn} entweder für den sensorisch unüberwachten Simulationsbereich SMB des öffentlichen oder gewerblichen Raums ÖFR, GWR oder alternativ für den sensorisch unüberwachten Simulationsbereich SMB des öffentlichen oder gewerblichen Raums ÖFR, GWR und den Überwachungsbereich ÜWB ein Personenaufkommen PAK. Mit dem Personenaufkommen PAK als Simulationsergebnis erzeugt der Personenstromsimulator PSS Personendaten PD, die Personen des simulierten Personenaufkommens PAK als die weiteren absolute Häufigkeiten H'_{abs} quantifizieren.

FIGUR 5 zeigt und visualisiert auf der Basis der FIGUR 1 und der dazugehörigen Figurenbeschreibung das dynamische Personenverhalten PV_{dyn} in dem öffentlichen oder gewerblichen Raum ÖFR, GWR gemäß der FIGUR 1, das im Zuge des systembasierten Erzeugens der personenbezogenen Daten erstellt worden ist.

FIGUR 6 zeigt und visualisiert auf der Basis der FIGUR 1 und der dazugehörigen Figurenbeschreibung das für einen ausgewählten Simulationsbereich SMBₐ des Simulationsbereichs SMB des öffentlichen oder gewerblichen Raum ÖFR, GWR simulierte Personenaufkommen PAK und die daraus erzeugten Personendaten PD. Der ausgewählte Simulationsbereich SMBₐ umfasst den gesamten (den oberen und unteren Teil) Transferbereich aus der Bahnhofshalle mit den Auf- und Abgängen zu den innerstädtischen Personentransportmitteln. Wird das in den Personendaten PD enthaltene Personenaufkommen PAK in dem ausgewählten Simulationsbereich SMBₐ in einer Koordinatendiagramm mit einer Zeit in [s] als Abszisse und einer Personenanzahl als Ordinate dargestellt, dann weist dieses Koordinatendiagramm aus, dass der untere Teil des Transferbereichs gegenüber dem oberen Teil des Transferbereichs ein fünffach höheres Personenaufkommen aufweist. Diese Erkenntnis kann genutzt werden, um speziell für den unteren Teil des Transferbereichs in dem ausgewählten Simulationsbereich SMBₐ gezielt Werbeanzeigen auf dem E-Plakat zu schalten und/oder das E-Plakat zu unterschiedlichen Zeiten preisabhängig zu Werbezwecken zu vermieten. Durch das vorstehend beschriebene erfindungsgemäße Erzeugen der Personendaten PD für den unüberwachten unteren Teil des Transferbereichs können trotz dieser Nichtüberwachung Aussagen über das Personenaufkommen PAK und des dynamischen Personenverhaltens PV_{dyn} gemacht werden und entsprechende Maßnahmen ergriffen. Der öffentliche oder gewerbliche Raum ÖFR, GWR muss also nicht lückenlos überwacht werden, um solche Aussagen machen zu können. Der Installationsaufwand von sensor-technischen Einrichtungen, wie die beschriebenen Überwachungssensoriken, in dem öffentlichen oder gewerblichen Raum ÖFR, GWR kann also unter Wirtschaftlichkeitsgesichtspunkten bei der Planung und dem Betrieb von öffentlichen oder gewerblichen Raum ÖFR, GWR signifikant reduziert werden.

## Patentansprüche

1. Computerimplementiertes Verfahren zur Erzeugung von personenbezogenen Daten für Personen-Aufenthaltsorte in öffentlichen oder gewerblichen Räumen, bei dem
a) in mindestens einem Überwachungsbereich (ÜWB) mit mindestens einem überwachten Personen-Aufenthaltsort (PAO_{üb}) eines öffentlichen Raums (ÖFR) oder eines gewerblichen Raums (GWR) jeweils mindestens einen Personenstrom an dem Personen-Aufenthaltsort (PAO_{üb}) durch mindestens eine Überwachungssensorik sensorisch erfasst wird und erfasste Personen des Personenstroms als absolute Häufigkeiten (H_{abs}) quantifizierende Sensordaten (SD) erzeugt werden,
b) der überwachte Personen-Aufenthaltsort (PAO_{üb}) und mindestens ein nicht-überwachter Personen-Aufenthaltsort (PAO_{nüb}) in dem öffentlichen oder gewerblichen Raum (ÖFR, GWR) als Personennavigationsziele (PNZ) von, insbesondere sich zahlenmäßig unterscheidenden und/oder dynamisch verändernden, Personenströmen (**i**) in einem auf der Basis eines Raum-Bauplan-Modells (RBPM) zum Abbilden eines statischen Raumszenarios generierten, den öffentlichen oder gewerblichen Raum (ÖFR, GWR) als Instanz oder Gattung angebenden Instanzengraph (IG) und (**ii**) in einem auf dem Instanzengraph (IG) basierenden, den öffentlichen oder gewerblichen Raum (ÖFR, GWR) als Klasse angebenden Klassengraph (KG) darstellbar sind, in dem jeweils die Personen-Aufenthaltsorte (PAO_{nüb}, PAO_{üb}) als Knoten (KN), Aufenthaltsdauern der Personen an den Personen-Aufenthaltsorten (PAO_{nüb}, PAO_{üb}) als Eigenschaften der Knoten (KN) und Personenbewegungen zwischen den Personen-Aufenthaltsorten (AO_{nüb}, AO_{üb}) als Eigenschaften von Kanten (KA) zwischen den Knoten (KN) repräsentiert werden und in dem im Fall des Klassengraphs (KG) die Personenbewegungen zwischen den Personen-Aufenthaltsorten (PAO_{nüb}, PAO_{üb}) quantitativ als relative Häufigkeiten (Hᵣₑₗ) angegeben werden,
c) die Personenbewegungen in dem Instanzengraph (IG) zum Abbilden eines dynamischen Personenverhaltens (PV_{dyn}) im öffentlichen oder gewerblichen Raum (ÖFR, GWR)
- an den Kanten (KA) zwischen den Knoten (KN) als die Repräsentation der überwachten Personen-Aufenthaltsorte (PAO_{üb}) durch die Sensordaten (SD) mit den absoluten Häufigkeiten (H_{abs}) angegeben werden,
- an den Kanten (KA) zwischen den Knoten (KN) als die Repräsentation der nicht-überwachten Personen-Aufenthaltsorte (PAO_{nüb}) durch Vergleich mit dem Klassengraph (KG) mit den dortigen, relativen Häufigkeiten angegeben und alle relativen Häufigkeiten (Hᵣₑₗ) durch einen Häufigkeitsvergleich (HV) mit den überwachten Personen-Aufenthaltsorten (PAO_{üb}) in weitere absolute Häufigkeiten (H'_{abs}) umgewandelt werden,
**gekennzeichnet durch**
eine Personenstromsimulation (PSS), mit der auf der Basis des in dem Raum-Bauplan-Modell (RBPM) abgebildeten statischen Raumszenarios und des in dem Instanzengraph (IG) abgebildeten dynamischen Personenverhaltens (PV_{dyn}) zumindest für einen außerhalb des Überwachungsbereichs (ÜWB, ÜWB1, ÜWB2) sensorisch unüberwachten Simulationsbereich (SMB, SMBₐ) des öffentlichen oder gewerblichen Raums (ÖFR, GWR) ein Personenaufkommen (PAK) simuliert wird und als Simulationsergebnis Personendaten (PD), die Personen des simulierten Personenaufkommens (PAK) als die weiteren absolute Häufigkeiten (H'_{abs}) quantifizieren, erzeugt werden.

2. Computerimplementiertes Verfahren nach Anspruch 1,
**dadurch gekennzeichnet, dass**
die Personenstromsimulation (PSS) in dem Überwachungsbereich (ÜWB) des öffentlichen oder gewerblichen Raums (ÖFR, GWR) durchgeführt wird.

3. Computerimplementiertes Verfahren nach Anspruch 1 oder 2,
**dadurch gekennzeichnet, dass**
der öffentliche Raum (ÖFR) ein Bahnhof, ein Flughafen oder ein Marktplatz ist.

4. Computerimplementiertes Verfahren nach einem der Ansprüche
1 bis 3, **dadurch gekennzeichnet, dass** der gewerbliche Raum (GWR) eine Einkaufspassage, ein Kaufhaus, ein Möbelhaus oder ein Supermarkt ist.

5. Computerimplementiertes Verfahren nach einem der Ansprüche 1 bis 4, **dadurch gekennzeichnet, dass** das Raum-Bauplan-Modell (RBPM) auf einem "Building Information Modeling <BIM>"-Modell basiert.

6. Computerimplementiertes Verfahren nach einem der Ansprüche 1 bis 5, **dadurch gekennzeichnet, dass** die Personenstromsimulation (PSS) auf eine mikroskopische Simulation der Personenströme, insbesondere einer Simulationssoftware vom Typ "Crowd Control" oder "Legion", basiert.

7. System (SYS) zur Erzeugung von personenbezogenen Daten für Personen-Aufenthaltsorte in öffentlichen oder gewerblichen Räumen, mit
a) mindestens einer Überwachungssensorik (ÜWS), die in mindestens einem Überwachungsbereich (ÜWB) mit mindestens einemüberwachten Personen-Aufenthaltsort (PAO_{üb}) eines öffentlichen oder gewerblichen Raums (ÖFR) oder eines gewerblichen Raums (GWR) jeweils mindestens einen Überwachungsbereich-Personenstrom sensorisch erfasst und erfasste Personen des Personenstroms als absolute Häufigkeiten (H_{abs}) quantifizierende Sensordaten (SD) erzeugt,
b) dem der überwachte Personen-Aufenthaltsort (PAO_{üb}) und mindestens ein nicht-überwachter Personen-Aufenthaltsort (PAO_{nüb}) in dem öffentlichen oder gewerblichen Raum (ÖFR, GWR) als Personennavigationsziele (PNZ) von, insbesondere sich zahlenmäßig unterscheidenden und/oder dynamisch verändernden, Personenströmen (i) in einem auf der Basis eines Raum-Bauplan-Modells (RBPM) zum Abbilden eines statischen Raumszenarios generierten, den öffentlichen oder gewerblichen Raum (ÖFR, GWR) als Instanz oder Gattung angebenden Instanzengraph (IG) und (**ii**) in einem auf dem Instanzengraph (IG) basierenden, den öffentlichen oder gewerblichen Raum (ÖFR, GWR) als Klasse angebenden Klassengraph (KG) darstellbar sind, in dem jeweils die Personen-Aufenthaltsorte (PAO_{nüb}, PAO_{üb}) als Knoten (KN), Aufenthaltsdauern der Personen an den Personen-Aufenthaltsorten (PAO_{nüb}, PAO_{üb}) als Eigenschaften der Knoten (KN) und Personenbewegungen zwischen den Personen-Aufenthaltsorten (AO_{nüb}, AO_{üb}) als Eigenschaften von Kanten (KA) zwischen den Knoten (KN) repräsentiert werden und in dem im Fall des Klassengraphs (KG) die Personenbewegungen zwischen den Personen-Aufenthaltsorten (PAO_{nüb}, PAO_{üb}) quantitativ als relative Häufigkeiten (Hᵣₑₗ) angegeben werden,
c) einer Vergleichs- und Zuordnungskomponente (VZK), in der die Personenbewegungen in dem Instanzengraph (IG) zum Abbilden eines dynamischen Personenverhaltens (PV_{dyn}) im öffentlichen oder gewerblichen Raum (ÖFR, GWR)
- an den Kanten (KA) zwischen den Knoten (KN) als die Repräsentation der überwachten Personen-Aufenthaltsorte (PAO_{üb}) durch die Sensordaten (SD) mit den absoluten Häufigkeiten (H_{abs}) angegeben werden,
- an den Kanten (KA) zwischen den Knoten (KN) als die Repräsentation der nicht-überwachten Personen-Aufenthaltsorte (PAO_{nüb}) durch Vergleich mit dem Klassengraph (KG) mit den dortigen, relativen Häufigkeiten angegeben und alle relativen Häufigkeiten (Hᵣₑₗ) durch einen Häufigkeitsvergleich (HV) mit den überwachten Personen-Aufenthaltsorten (PAO_{üb}) in weitere absolute Häufigkeiten (H'_{abs}) umgewandelt werden,
**gekennzeichnet durch**
einen Personenstromsimulator (PSS), mit dem auf der Basis des in dem Raum-Bauplan-Modell (RBPM) abgebildeten statischen Raumszenarios und des in dem Instanzengraph (IG) abgebildeten dynamischen Personenverhaltens (PV_{dyn}) zumindest für einen außerhalb des Überwachungsbereichs (ÜWB, ÜWB1, ÜWB2) sensorisch unüberwachten Simulationsbereich (SMB, SMBₐ) des öffentlichen oder gewerblichen Raums (ÖFR, GWR) ein Personenaufkommen (PAK) simuliert wird und als Simulationsergebnis Personendaten (PD), die Personen des simulierten Personenaufkommens (PAK) als die weiteren absolute Häufigkeiten (H'_{abs}) quantifizieren, erzeugt werden.

8. System (SYS) nach Anspruch 7, **dadurch gekennzeichnet, dass**
in dem Überwachungsbereich (ÜWB, ÜWB1, ÜWB2) des öffentlichen oder gewerblichen Raums (ÖFR, GWR) Personenstromsimulation (PSS) mit dem Personenstromsimulator (PSS) durchführbar ist.

9. System (SYS) nach Anspruch 7 oder 8, **dadurch gekennzeichnet, dass**
der öffentliche Raum (ÖFR) ein Bahnhof, ein Flughafen oder ein Marktplatz ist.

10. System (SYS) nach einem der Ansprüche 7 bis 9, **dadurch gekennzeichnet, dass**
der gewerbliche Raum (GWR) eine Einkaufspassage, ein Kaufhaus, ein Möbelhaus oder ein Supermarkt ist

11. System (SYS) nach einem der Ansprüche 7 bis 10, **dadurch gekennzeichnet, dass**
das Raum-Bauplan-Modell (RBPM) auf einem "Building Information Modeling <BIM>"-Modell basiert.

12. System (SYS) nach einem der Ansprüche 7 bis 11, **dadurch gekennzeichnet, dass**
der Personenstromsimulator (PSS) derart ausgebildet ist, dass eine mikroskopische Simulation der Personenströme, insbesondere mittels einer Simulationssoftware vom Typ "Crowd Control" oder "Legion", durchgeführt wird.

13. System (SYS) nach einem der Ansprüche 7 bis 12, **gekennzeichnet durch**
ein computerimplementiertes Werkzeug (CIW), insbesondere ein z.B. als APP ausgebildetes Computer-Programm-Produkt (CPP), mit einem nicht-flüchtigen, lesbaren Speicher (SP), in dem prozessorlesbare Steuerprogrammbefehle eines Programm-Moduls (PGM) gespeichert sind, und einem mit dem Speicher (SP) verbundenen Prozessor (PZ), der die Steuerprogrammbefehle des Programm-Moduls (PGM) ausführt, wobei das Programm-Modul (PGM) im Zuge der personenbezogenen Datenerzeugung die Vergleichs- und Zuordnungskomponente (VZK) und den Personenstromsimulator (PSS) enthält.
